# EUROPÄISCHE PATENTANMELDUNG

(11) **EP 4 140 850 A1**
(43) Veröffentlichungstag der Anmeldung: **01.03.2023**
(21) Anmeldenummer: 21194142.2
(22) Anmeldetag: 31.08.2021
(51) Int. Cl.: B61D 17/18

(54) **BRANDGESCHÜTZTE BODENSTRUKTUR EINES WAGENKASTENS IN LEICHTBAUWEISE**

(71) Anmelder: 3A Composites Mobility AG, 9423 Altenrhein (CH)
(72) Erfinder: Panagiotis, Michos, 8590 Romanshorn (CH); Hartwig, Markus, 9008 St. Gallen (CH)
(74) Vertreter: Gernet Althaus IP AG

(57) **Zusammenfassung**

Brandgeschützte Bodenstruktur eines Wagenkastens enthaltend eine Sandwichplatte (5) aus einer metallischen Deckschicht (10) und einer metallischen Basisschicht (20) und eine dazwischenliegende Schicht aus einer Kernschicht (30) aus nicht feuerfestem Material sowie metallische Randprofile (40). Die Kernschicht (30) ist vollständig durch die metallischen Deck- und Basisschichten (10, 20) und die Randprofile (40) eingeschlossen. Die Bodenstruktur weist auf der der Kernschicht (30) abgewandten Seite der Basisschicht (20) eine mineralische Kühlmittelschicht (60) und in Bereichen zur Befestigung von Anschlussprofilen (90) intumeszierende Hartschichtplatten (80) auf, wobei ein innerer Bereich der Hartschichtplatten (80) jeweils einen intumeszierenden Klebstoffschichtbereich (85) aufweist und die der Kernschicht (30) abgewandte Seite der mineralischen Kühlmittelschicht (60) sowie zumindest ein Randbereich der nicht mit dem intumeszierenden Klebstoff (85) bedeckten Bereiche der Hartschichtplatten (80) mit einer intumeszierenden Schicht (70) bedeckt sind, und die Anschlussprofile (90) in einem inneren Bereich auf der der Kernschicht (30) abgewandten Seite der intumeszierenden Klebstoffschichtbereiche (85) aufgeklebt sind.

## Beschreibung

Die Erfindung betrifft eine brandgeschützte Bodenstruktur eines Wagenkastens für Schienen- oder Strassentransportfahrzeuge in Leichtbauweise.

Für Bodenstrukturen von Schienen- oder Strassentransportfahrzeugen wird oft die Norm ASTM E 119 angefordert, d.h. im Brandfall mit Temperaturen bis 840-860 °C darf die Oberflächentemperatur an der Deckschicht der Bodenstruktur während 30 Minuten im Mittel die Temperatur von 140 °C nicht übersteigen und eine mit 400 kg/m² belastete Bodenstruktur darf während 30 Minuten nicht kollabieren.

Feuerfeste Untergestell-Bodenstrukturen für Schienenfahrzeuge sind aus dem Stand der Technik an sich bekannt. So beschreibt CN110641491A ein Verfahren zur Herstellung einer Untergestell-Brandschutzbodenstruktur für Schienenfahrzeuge umfassend einen Boden-Lastaufnahmerahmen und einen auf dem Boden-Lastaufnahmerahmen verlegten Boden, wobei der Boden-Lastaufnahmerahmen unter Verwendung von Kohlenstoffstahl integral geschweisst ist und einen rechteckigen Außenrahmen und eine Vielzahl von Querträgern aufweist. Dabei sind hutförmige Brandschutzplatten mit nach unten gerichteten Oberseiten zwischen jeweils zwei benachbarten Querträgern angeordnet und die Seitenwände der hutförmigen Brandschutzplatten sind zwischen den beiden benachbarten Querträgern eingespannt. Die beiden Ränder der hutförmigen feuerfesten Platten sind entsprechend und integral mit den oberen Oberflächen der beiden benachbarten Querträger verbunden. Der Boden ist mit jedem Querträger durch Verwendung eines Klebers verbunden und kältefeste und wärmeisolierende, aus Keramikfasern bestehende Materialien sind zwischen dem Boden und den hutförmigen feuerfesten Platten angeordnet.

CN210454809A beschreibt eine Bodenstruktur für ein Schienenfahrzeug, wobei die Bodenstruktur eine Schicht aus rostfreiem Stahlblech umfasst und eine Wärmeisolationsschicht auf der rostfreien Stahlschicht angeordnet ist. Ein Aluminiumprofil-Bodenrahmen ist auf der Wärmeisolationsschicht angeordnet.

US2018/0215398A1 beschreibt einen Bodenaufbau, der mit einem Untergestell versehen ist, das Teil eines Wagenkastens ist. Das Untergestell erstreckt sich entlang einer Längsachse, die mit der Vorschubachse eines solchen Wagens zusammenfällt, und eine Vielzahl von Längsbefestigungsschienen aufweist, die auf einem Bereich der unteren Oberfläche des Untergestells angeordnet sind. die Befestigungsschienen ragen nach unten, um dazwischen eine Vielzahl von Fächern zu begrenzen, in die Platten mit Isoliermaterial eingesetzt sind, um ein Brandschutzsystem zu bilden.

EP0806539A1 beschreibt einen Verbundlaminatboden für Eisenbahnwaggons mit inneren Hohlräumen, von denen mindestens einer mit einem intumeszierenden Material gefüllt ist. Bei Brandeinwirkung verzögert oder verhindert ein solcher Gegenstand den Durchbruch des Feuers in ein angrenzendes Abteil oder einen angrenzenden Raum für eine ausreichende Zeit, um den Insassen zu ermöglichen, das angrenzende Abteil zu evakuieren oder das Feuer zu löschen. Das intumeszierende Material entspricht den Anforderungen der ASTM E 152.

Das Problem bei der Herstellung von brandgeschützten Bodenstrukturen für Wagenkasten von Schienen- oder Strassenfahrzeugen ist das hohe Gewicht der aus dem Stand der Technik bekannten Bodenstrukturen, welche die Brandschutzanforderungen nach ASTM E 119 erfüllen.

Aufgabe vorliegender Erfindung ist die Bereitstellung einer brandgeschützten Bodenstruktur eines Wagenkastens für Schienen- und Strassentransportfahrzeuge in Leichtbauweise, welche die Anforderungen nach dem Prüfprotokoll ASTM E 119 erfüllen. Diese Bodenstruktur muss somit eine Barriere gegen das Feuer auf der geschützten Seite der Bodenstruktur, d.h. der Wageninnenseite, aufrechterhalten und eine ausreichende strukturelle Integrität bieten, um die Tragfähigkeit der Bodenstruktur auch im Brandfall aufrecht zu erhalten. Eine weitere Aufgabe der Erfindung betrifft den einfachen Einbau einer Bodenstruktur in den Wagenkasten.

Diese Aufgaben werden durch eine brandgeschützte Bodenstruktur gemäss Anspruch 1 gelöst. Bevorzugte Ausführungsformen der Bodenstruktur sind in den vom unabhängigen Anspruch 1 direkt oder indirekt abhängigen Ansprüchen beschrieben.

Die erfindungsgemässe brandgeschützte Bodenstruktur eines Wagenkastens für Schienen- und Strassenfahrzeuge weist eine Sandwichplatte aus einer metallischen Deckschicht und einer metallischen Basisschicht und eine dazwischenliegende Schicht aus einer Kernschicht aus nicht feuerfestem Material sowie metallische Randprofile auf. Die Randprofile sind dabei dergestalt ausgebildet, dass die Kernschicht vollständig durch die metallischen Deck- und Basisschichten und die Randprofile eingeschlossen ist. Die Bodenstruktur weist auf der der Kernschicht abgewandten Seite der Basisschicht eine mineralische Kühlmittelschicht und in Bereichen zur Befestigung von Anschlussprofilen intumeszierende Hartschichtplatten auf, wobei ein innerer Bereich auf der der Sandwichplatte abgewandten Seite der Hartschichtplatten jeweils einen intumeszierenden Klebstoffschichtbereich aufweist. Die der Kernschicht abgewandte Seite der Basisschicht ist somit vollflächig durch die mineralische Kühlmittelschicht und die intumeszierenden Hartschichtplatten bedeckt, da sich auf der Basisschicht entweder die intumeszierenden Hartschichtplatten oder die mineralische Kühlmittelschicht befinden, d.h. die mineralische Kühlmittelschicht umgibt die intumeszierenden Hartschichtplatten. Die der Sandwichplatte abgewandte Seite der mineralischen Kühlmittelschicht sowie zumindest ein Randbereich der nicht mit dem intumeszierenden Klebstoff bedeckten Bereiche der Hartschichtplatten sind mit einer intumeszierenden Schicht bedeckt. Die Anschlussprofile sind jeweils in einem inneren Bereich auf der der Sandwichlatte abgewandten Seite der intumeszierenden Klebstoffschicht-Bereiche aufgeklebt.

Das nicht feuerfeste Material der Kernschicht bedeutet insbesondere, dass dieses mit dem Sauerstoff der Luft unter Freisetzung von Strahlungsenergie bzw. Wärme reagieren kann und nach der Entflammung weiterbrennt, auch wenn die Zündquelle entfernt wird.

Kernschichten aus nicht feuerfestem Material sind bevorzugt Kernschichten aus Strukturschaum, insbesondere Kernschichten aus PET-Schaum, oder Kernschichten aus Balsaholz, insbesondere aus Balsa-Hirnholzplatten. Weiter bevorzugt sind Kernschichten, welche PET oder Balsaholz zumindest zu 95 Gew-% enthalten.

Intumeszierende Materialien schäumen unter Hitzeeinwirkung auf, d.h. sie nehmen unter Hitzeeinwirkung an Volumen zu und entsprechend an Dichte ab. Die Volumenzunahme der intumeszierenden Materialien beträgt zweckmässigerweise bis zum 20-fachen des ursprünglichen Materialvolumens.

Schienenfahrzeuge zur Anwendung vorliegender Bodenstruktur sind insbesondere Eisenbahn-, Metro-, S- und U-Bahnzüge und Trams. Bevorzugte Anwendungen der Bodenstrukturen in Strassenfahrzeugen sind insbesondere Wagenkasten von Omnibussen und anderen nicht schienengebundenen Fahrzeugen des öffentlichen Verkehrs. Besonders bevorzugte Anwendungen betreffen batteriebetriebene Fahrzeuge (e-Mobility).

Die metallischen Deck- und Basisschichten sowie die Randprofile der Sandwichplatte bestehen bevorzugt aus Aluminium.

Die mineralische Kühlmittelschicht ist - mit Ausnahme der Bereiche, welche intumeszierende Hartschichtplatten aufweisen - bevorzugt vollflächig auf die Basisschicht (20) vorzugsweise mit einem Zweikomponenten Polyurethan- oder Epoxidharz-Klebstoff aufgeklebt.

Die mineralische Kühlmittelschicht besteht bevorzugt aus einer Schicht aus zementgebundenem Calciumsilikat. Die Kühlwirkung beruht dabei auf der endothermen Verdunstung von hydratisierten Mineralien. Die mineralische Kühlmittelschicht ist zweckmässig 1 bis 3 mm dick. Bevorzugt wird das Handelsprodukt ENEX eingesetzt. ENEX besteht aus Metall-Hydraten und ist ein mineralisches Kühlmittel, welches bei Erwärmung über eine Grenztemperatur grosse Mengen Wärme aufnimmt. Die Wirkung beruht auf der Verdunstung von hydratisierten Mineralien.

Die intumeszierende Schicht ist - mit Ausnahme der mit intumeszierendem Klebstoff bedeckten Bereiche der Hartschichtplatten - bevorzugt vollflächig auf die mineralische Kühlmittelschicht sowie jeweils einem Randbereich der intumeszierenden Hartschichtplatten aufgeklebt. Dabei wird bevorzugt ein Zweikomponenten Polyurethanklebstoff verwendet.

Die intumeszierende Schicht besteht bevorzugt aus einem intumeszierenden Vlies, wobei das Vlies bevorzugt aus Silikatfasern besteht. Die intumeszierende Schicht ist zweckmässig 0.7 bis 3 mm dick. Bevorzugt wird für die intumeszierende Schicht das Handelsprodukt PYRO-SAFE eingesetzt.

Die Bodenstruktur weist in der Draufsicht eine im Wesentlichen rechteckige Struktur mit einer Breite zweckmässigerweise zwischen 1.5 und 4 m, bevorzugt zwischen 2 und 3 m und einer Länge zweckmässigerweise zwischen 6 m und 25 m, bevorzugt zwischen 10 und 20 m auf.

Die Bodenstruktur ist bevorzugt selbsttragend ausgebildet, wobei die Sandwichplatte eine Dicke von zweckmässig 30 bis 80 mm und bevorzugt 50 bis 70 mm aufweist.

Die Deck- und Basisschichten des Sandwiches weisen bevorzugt eine Dicke von 1.0 bis 2.0 mm auf.

Die intumeszierenden Hartschichtplatten bestehen vorzugsweise aus einem auf Graphit basierenden Plattenmaterial. Für die Befestigung eines Anschlussprofils wird jeweils eine intumeszierende Hartschichtplatte benötigt, da das Profil auf der intumeszierenden Schicht nicht sicher aufgeklebt werden kann.

Die intumeszierenden Hartschichtplatten bestehen weiter bevorzugt aus unter Hochdruck verpresstem, intumeszirendem Vlies, wie beispielsweise vorstehend beschrieben.

Anschlussprofile, bevorzugt C-Schienen, zur Aufnahme von Rohren oder Leitungen befinden sich auf den freiliegenden Oberflächenbereichen der intumeszierenden Hartschichtplatten, wobei diese Anschlussprofile bevorzugt mittels einem intumeszierenden Klebstoff an den intumeszierenden Hartschichtplatten angebracht sind.

Die erfindungsgemässe Bodenstruktur wird bevorzugt über die Randprofile des Sandwiches mit den Wänden des Wagenkastens mittels Befestigungsmittel verbunden. Die Befestigung kann beispielsweise durch Schweissen oder mittels Schrauben, Nieten oder Kleben erfolgen.

Die Erfindung wird anhand der folgenden beispielhaften Zeichnungen weiter erläutert.
- Fig. 1: zeigt einen schematischen Querschnitt durch eine erfindungsgemässe Bodenstruktur eines Wagenkastens;
- Fig. 2: zeigt eine perspektivische Ansicht vom Fahrzeugboden her gesehen auf einen Ausschnitt einer erfindungsgemässen Bodenstruktur eines Wagenkastens eines Schienen- oder Strassenfahrzeuges;
- Fig. 3: zeigt eine weitere perspektivische Ansicht vom Fahrzeugboden her gesehen auf einen Ausschnitt einer erfindungsgemässen Bodenstruktur eines Wagenkastens eines Schienen- oder Strassenfahrzeuges;
- Fig. 4: zeigt eine perspektivische Sicht auf die Oberfläche einer erfindungsgemässen Bodenstruktur;
- Fig. 5: zeigt eine perspektivische Sicht auf die Unterseite einer erfindungsgemässen Bodenstruktur.

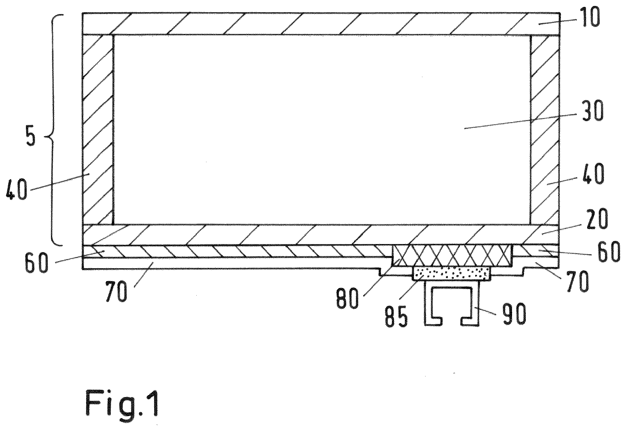

Fig. 1 zeigt einen schematischen Querschnitt durch eine erfindungsgemässe Bodenstruktur eines Wagenkastens. Die Bodenstruktur weist eine Sandwichplatte 5 auf, welche eine metallische Deckschicht 10 und eine metallische Basisschicht 20, eine dazwischenliegende Schicht aus einer Kernschicht 30 aus nicht feuerfestem Material, sowie metallische Randprofile 40 enthält, wobei die Randprofile 40 dergestalt ausgebildet sind, dass die Kernschicht 30 vollständig durch die metallischen Deck- und Basisschichten 10, 20 und die Randprofile 40 eingeschlossen ist. Die Bodenstruktur weist auf der der Kernschicht 30 abgewandten Seite der Basisschicht 20 eine mineralische Kühlmittelschicht 60 oder in einem Bereich zur Befestigung des Anschlussprofils 90 eine intumeszierende Hartschichtplatte 80 auf, so dass die der Kernschicht 30 abgewandte Seite der Basisschicht 20 vollflächig entweder mit der mineralischen Kühlmittelschicht 60 oder mit der intumeszierenden Hartschichtplatte 80 bedeckt ist. Ein innerer Bereich auf der der Sandwichplatte 5 abgewandten Seite der Hartschichtplatte 80 weist eine intumeszierende Klebstoffschicht 85 auf. Dabei versteht sich der Begriff «innerer Bereich» als ein innerer Bereich der Hartschichtplatte in der Draufsicht auf die Hartschichtplatte gesehen. Die der Sandwichlatte 5 abgewandte Seite der mineralischen Kühlmittelschicht 60 sowie der nicht mit dem intumeszierenden Klebstoff 85 bedeckte Bereich der Hartschichtplatte 80 ist mit einer intumeszierenden Schicht 70 bedeckt. Somit bedeckt die intumeszierende Schicht 70 die ganze mineralische Kühlmittelschicht 60 und überlappt den nicht mit der intumeszierenden Klebstoffschicht 85 bedeckte Teil der Hartschichtplatte 80. Das Anschlussprofil 90 ist auf der der Sandwichlatte 5 abgewandten Seite der intumeszierenden Klebstoffschicht 85 aufgeklebt, wobei sich das Anschlussprofil in einem inneren Bereich der intumeszierenden Klebstoffschicht 85 befindet, so dass zwischen dem Anschlussprofil 90 und dem äusseren Rand der intumeszierenden Klebstoffschicht 85 ein Abstand besteht. Der innere Bereich der intumeszierenden Klebstoffschicht meint wiederum den inneren Bereich in der Draufsicht auf die intumeszierende Klebstoffschicht gesehen. Das Anschlussprofil ist eine C-Schiene, wobei sich das «C» auf den Querschnitt der Längsschiene bezieht. In der Draufsicht auf die Unterseite der Bodenstruktur kann die intumeszierenden Klebstoffschicht 85 eine beliebige Gestalt aufweisen und insbesondere kreisförmig, oval oder rechteckig sein.

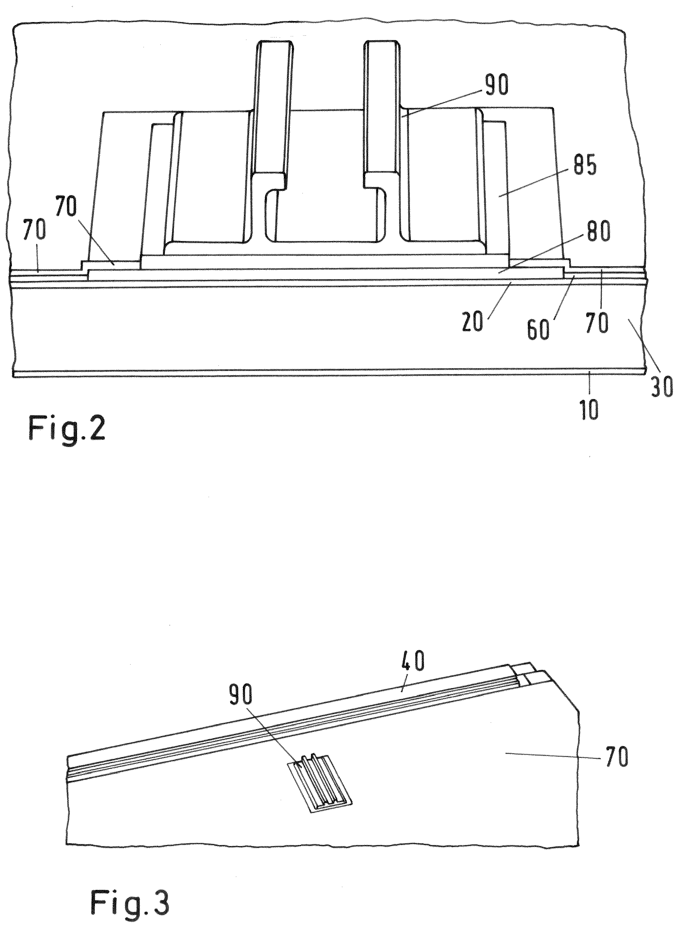

Fig. 2 zeigt eine perspektivische Ansicht vom Fahrzeugboden her gesehen auf einen Ausschnitt einer erfindungsgemässen Bodenstruktur eines Wagenkastens eines Schienen- oder Strassenfahrzeuges. Wenn die erfindungsgemässe Bodenstruktur an einem Wagenkasten befestigt ist, sind die Befestigungselemente - wie hier eine einzelne C-Schiene - gegen den Boden des Fahrzeuges, bzw. gegen die Räder gerichtet.

Fig. 2 zeigt im unteren Teil die Sandwichstruktur 5 mit den Deck- und Basisschichten 10, 20, welche eine Kernschicht 30 aus nicht feuerfestem Material einschliessen. Auf der der Kernschicht 30 abgewandten Seite der Basisschicht 20 ist eine mineralische Kühlmittelschicht 60 und in einem Bereich zur Befestigung des Anschlussprofils 90 eine intumeszierende Hartschichtplatte 80 zu sehen. Ein innerer Bereich auf der der Kernschicht 30 abgewandten Seite der Hartschichtplatte 80 weist eine intumeszierende Klebstoffschicht 85 auf. Die der Kernschicht 30 abgewandte Seite der mineralischen Kühlmittelschicht 60 sowie der nicht mit dem intumeszierenden Klebstoff 85 bedeckte Bereich der Hartschichtplatte 80 ist mit einer intumeszierenden Schicht 70 bedeckt. Somit bedeckt die intumeszierende Schicht 70 die ganze mineralische Kühlmittelschicht 60 und überlappt zumindest einen Randbereich des nicht mit dem intumeszierenden Klebstoffschichtbereich 85 bedeckten Teils der Hartschichtplatte 80. Die C-Schiene 90 ist auf der der Kernschicht 30 abgewandten Seite der intumeszierenden Klebstoffschicht 85 aufgeklebt. Die intumeszierende Hartschichtplatten 80 weist eine rechteckige Gestalt auf und ihr Randbereich ist in Fig. 2 durch die rechteckige Linie auf der Oberfläche der intumeszierenden Schicht 70 angedeutet. Die intumeszierende Klebstoffschicht 85 hat ebenfalls eine rechteckförmige Flächengestalt, wobei sich deren Ausdehnung innerhalb der intumeszierenden Hartschichtplatte 80 befindet.

Fig. 3 zeigt eine weitere perspektivische Ansicht vom Fahrzeugboden her gesehen auf einen Ausschnitt einer erfindungsgemässen Bodenstruktur eines Wagenkastens eines Schienen- oder Strassenfahrzeuges. Fig. 3 zeigt die Bodenstruktur mit Randprofil 40 und der Aussenfläche der intumeszierenden Schicht 70. Eine C-Schiene 90 steht gegenüber der intumeszierenden Schicht 70 vor.

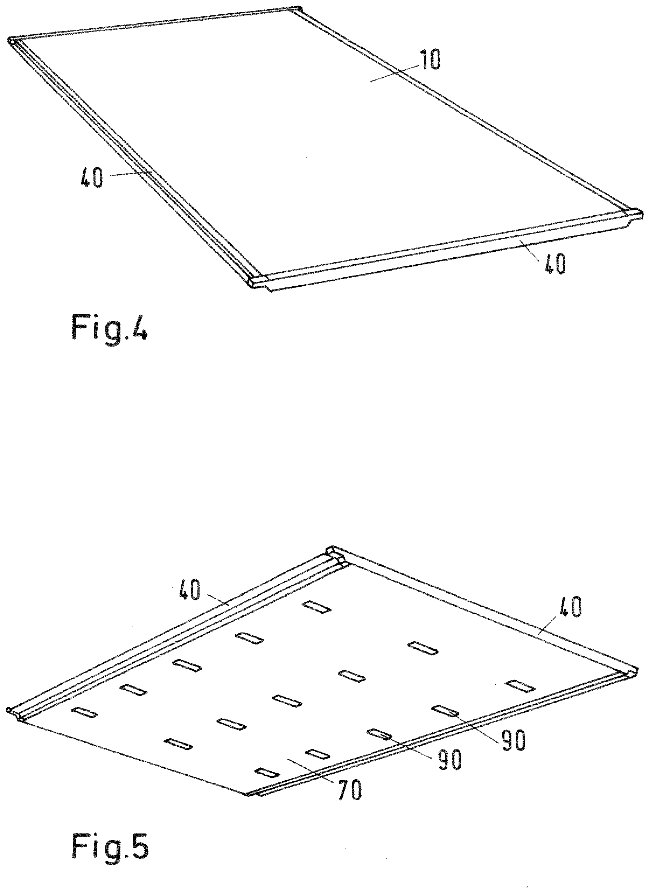

Fig. 4 zeigt eine perspektivische Sicht auf die Oberfläche einer erfindungsgemässen Bodenstruktur, wobei die Oberfläche durch die metallische Deckschicht 10 gebildet wird. Fig. 4 zeigt weiter das umlaufende Randprofil 40 der Sandwichplatte 5.

Fig. 5 zeigt eine perspektivische Sicht auf die Unterseite einer erfindungsgemässen Bodenstruktur, wobei die untere Oberfläche durch die intumeszierende Schicht 70 und eine Vielzahl von gegenüber der Oberfläche der intumeszierenden Schicht 70 vorstehenden C-Schienen gebildet wird. Fig. 5 zeigt weiter das umlaufende Randprofil 40 der Sandwichplatte 5.

Im Folgenden werden zwei durchgeführte Brandschutztests gemäss ISO 834-1 in Anlehnung an ASTM E 119 kurz erläutert.

### Test 1:

Eine quadratisch ausgebildete Bodenplatte mit einer Oberfläche von 0.35 m² wurde mit einem Gewicht von 1470 Newton belastet. die Bodenplatte bestand aus einer AI-Deckschicht und einer Basisschicht aus Aluminium einer Dicke von je 1 mm und einer dazwischenliegenden Kernschicht aus PET-Schaum sowie metallischen Randprofile aus Aluminium. Die Randprofile waren dergestalt ausgebildet, dass die Kernschicht vollständig durch die metallischen Deck- und Basisschichten und die Randprofile eingeschlossen war. Die Bodenplatte wies auf der der Kernschicht abgewandten Seite der Basisschicht eine 2 mm dicke mineralische Kühlmittelschicht aus ENEX und in einem Bereich zur Befestigung einer C-förmigen Anschlussschiene eine intumeszierende Hartschichtplatte aus unter Hochdruck verpresstem, intumeszierendem Vlies aus PYRO-SAVE auf. Ein innerer Bereich auf der der Kernschicht abgewandten Seite der Hartschichtplatte wies einen intumeszierenden Klebstoffschichtbereich auf und die der Kernschicht abgewandte Seite der mineralischen Kühlmittelschicht aus ENEX sowie zumindest ein Randbereich der nicht mit dem intumeszierenden Klebstoff bedeckten Bereich der Hartschichtplatte war mit einer 2.2 mm dicken intumeszierenden Schicht aus PYRO-SAVE bedeckt. Ein Anschlussprofil war in einem inneren Bereich auf der der Kernschicht abgewandten Seite des intumeszierenden Klebstoffschichtbereiches aufgeklebt.

Die Bodenplatte wurde dann in einen Ofen gegeben und gemäss ISO 834-1 unter Einhaltung der Einheitstemperaturkurve nach DIN EN 1363-1 getestet. Das Testverfahren nach ISO 834-1 entspricht in Teilen der ASTM E 119-Prüfung. Die Temperaturmessung erfolgte auf der Deckschicht mittig der Bodenplatte. Dabei wurde die Deckschicht der Bodenplatte in einem Zeitraum von 35 Minuten gemäss nachfolgender Tabelle 1 von 20°C bis 862°C aufgeheizt, wobei die Struktur der Bodenplatte auch nach 35 Minuten noch intakt war.

**Tabelle 1: Temperatur-Zeitkurve nach DIN EN 1363-1**

| Zeit ab Versuchsstart [min] | Gemessene Oberflächentemperatur auf der Deckschicht [°C] | Zeit ab Versuchsstart [min] | Gemessene Oberflächentemperatur auf der Deckschicht [°C] |
|---|---|---|---|
| 0 | 20 | 18 | 780 |
| 1 | 123 | 19 | 787 |
| 2 | 220 | 20 | 794 |
| 3 | 330 | 21 | 799 |
| 4 | 434 | 22 | 804 |
| 5 | 538 | 23 | 810 |
| 6 | 571 | 24 | 815 |
| 7 | 604 | 25 | 821 |
| 8 | 638 | 26 | 825 |
| 9 | 671 | 27 | 829 |
| 10 | 704 | 28 | 834 |
| 11 | 720 | 29 | 838 |
| 12 | 731 | 30 | 843 |
| 13 | 740 | 31 | 847 |
| 14 | 749 | 32 | 851 |
| 15 | 758 | 33 | 854 |
| 16 | 766 | 34 | 858 |
| 17 | 773 | 35 | 862 |

### Test 2:

Als Vergleichsversuch wurde eine gleiche Bodenplatte mit gleichem Aufbau wie im ersten Versuch, jedoch ohne mineralische Kühlmittelschicht nach den Richtlinien der ISO 834-1 getestet, wobei als intumeszierende Schicht eine 2 mm dicke Schicht aus Sika Unitherm Platinum verwendet wurde. Sika Unitherm Platinum ist eine lösemittelfreie 2K Brandschutzbeschichtung auf Epoxidharzbasis mit 100 % Festkörpervolumen.

Die Bodenplatte wurde wiederum in einen Ofen gegeben und gemäss ISO 834-1 unter Einhaltung der Einheitstemperaturkurve nach DIN EN 1363-1 getestet. Der Versuch musste jedoch nach 18 min abgebrochen werden, da die zulässige Temperatur-Zeitkurve nach DIN EN 1363-1 überschritten wurde und die Bodenplatte brannte.

## Patentansprüche

1. Brandgeschützte Bodenstruktur eines Wagenkastens,
**dadurch gekennzeichnet, dass**
die Bodenstruktur eine Sandwichplatte (5) aus einer metallischen Deckschicht (10) und einer metallischen Basisschicht (20) und eine dazwischen liegende Kernschicht (30) aus nicht feuerfestem Material sowie metallische Randprofile (40) aufweist, wobei die Randprofile (40) dergestalt ausgebildet sind, dass die Kernschicht (30) vollständig durch die metallischen Deck- und Basisschichten (10, 20) und die Randprofile (40) eingeschlossen ist, und die Bodenstruktur auf der der Kernschicht (30) abgewandten Seite der Basisschicht (20) eine mineralische Kühlmittelschicht (60) oder in Bereichen zur Befestigung eventueller Anschlussprofile (90) intumeszierende Hartschichtplatten (80) aufweist, wobei ein innerer Bereich auf der der Sandwichplatte abgewandten Seite der Hartschichtplatten (80) jeweils einen intumeszierenden Klebstoffschichtbereich (85) aufweist und die der Kernschicht (30) abgewandte Seite der mineralischen Kühlmittelschicht (60) sowie zumindest ein Randbereich der nicht mit dem intumeszierenden Klebstoff (85) bedeckten Bereiche der Hartschichtplatten (80) mit einer intumeszierenden Schicht (70) bedeckt sind, und eventuelle Anschlussprofile (90) in einem inneren Bereich auf der der Kernschicht (30) abgewandten Seite der intumeszierenden Klebstoffschichtbereiche (85) aufgeklebt sind.

2. Brandgeschützte Bodenstruktur nach Anspruch 1, **dadurch gekennzeichnet, dass** der Wagenkasten ein Wagenkasten für Strassen- oder Schienenfahrzeuge ist.

3. Brandgeschützte Bodenstruktur nach Anspruch 1 oder 2, **dadurch gekennzeichnet, dass** die metallische Deck- und Basisschichten (10, 20) sowie die Randprofile (40) der Sandwichplatte (5) aus Aluminium sind.

4. Brandgeschützte Bodenstruktur nach einem der Ansprüche 1 bis 3, **dadurch gekennzeichnet, dass** die Kernschicht (30) aus PET oder Balsaholz besteht, oder PET oder Balsaholz zumindest zu 95 Gew-% enthält.

5. Brandgeschützte Bodenstruktur nach einem der Ansprüche 1 bis 4, **dadurch gekennzeichnet, dass** ausserhalb der Bereiche der Basisschicht (20), welche intumeszierende Hartschichtplatten aufweisen, die mineralische Kühlmittelschicht (60) vollflächig auf die Basisschicht (20) vorzugsweise mit einem Zweikomponenten Polyurethanklebstoff aufgeklebt ist.

6. Brandgeschützte Bodenstruktur nach einem der Ansprüche 1 bis 5, **dadurch gekennzeichnet, dass** die mineralische Kühlmittelschicht (60) aus einer Schicht aus zementgebundenem Calciumsilikat besteht.

7. Brandgeschützte Bodenstruktur nach Anspruch 6, **dadurch gekennzeichnet, dass** die mineralische Kühlmittelschicht (60) 1 bis 3 mm dick ist.

8. Brandgeschützte Bodenstruktur nach einem der Ansprüche 1 bis 7, **dadurch gekennzeichnet, dass** die intumeszierende Schicht (70) vollflächig auf die mineralische Kühlmittelschicht (60) sowie jeweils über einen Randbereich der intumeszierenden Hartschichtplatten vorzugsweise mit einem Zweikomponenten Polyurethanklebstoff aufgeklebt ist.

9. Brandgeschützte Bodenstruktur nach einem der Ansprüche 1 bis 8, **dadurch gekennzeichnet, dass** die intumeszierende Schicht (70) aus einem intumeszierenden Vlies besteht, wobei das Vlies bevorzugt aus Silikatfasern besteht.

10. Brandgeschützte Bodenstruktur nach Anspruch 9, **dadurch gekennzeichnet, dass** die intumeszierende Schicht (70) 0.7 bis 3.0 mm dick ist.

11. Brandgeschützte Bodenstruktur nach einem der Ansprüche 1 bis 10, **dadurch gekennzeichnet, dass** die Bodenstruktur in der Draufsicht eine im Wesentlichen rechteckige Struktur mit einer Breite zweckmässigerweise zwischen 1.5 und 4 m, bevorzugt zwischen 2 und 3 m und einer Länge zweckmässigerweise zwischen 6 m und 25 m, bevorzugt zwischen 10 und 20 m aufweist.

12. Brandgeschützte Bodenstruktur nach einem der Ansprüche 1 bis 11, **dadurch gekennzeichnet, dass** die Bodenstruktur selbsttragend ausgebildet ist, wobei die Sandwichplatte (5) eine Dicke von zweckmässig 30 bis 80 mm und bevorzugt 50 bis 70 mm aufweist.

13. Brandgeschützte Bodenstruktur nach einem der Ansprüche 1 bis 12, **dadurch gekennzeichnet, dass** die Deck- und Basisschichten (10, 20) des Sandwiches (5) eine Dicke von 1.0 bis 2.0 mm aufweisen.

14. Brandgeschützte Bodenstruktur nach einem der Ansprüche 1 bis 13, **dadurch gekennzeichnet, dass** die intumeszierende Hartschichtplatte (80) aus einem auf Graphit basierenden Plattenmaterial besteht.

15. Brandgeschützte Bodenstruktur nach einem der Ansprüche 1 bis 14, **dadurch gekennzeichnet, dass** die freiliegende Oberfläche der intumeszierenden Hartschichtplatte (80) wenigstens ein C-Profil (90) zur Aufnahme von Rohren oder Leitungen aufweist, wobei das wenigstens eine C-Profil (90) mittels einem intumeszierenden Klebstoff an der intumeszierenden Hartschichtplatte (80) angebracht ist.

16. Brandgeschützte Bodenstruktur nach einem der Ansprüche 1 bis 15, **dadurch gekennzeichnet, dass** die Bodenstruktur über die Randprofile der Sandwichplatte (5) mit den Wänden des Wagenkastens mittels Befestigungsmittel verbunden ist.
